# EUROPEAN PATENT APPLICATION

(11) **EP 2 299 736 A1**
(43) Date of publication of application: **23.03.2011**
(21) Application number: 08777935.1
(22) Date of filing: 07.07.2008
(51) Int. Cl.: H04W 4/00, H04W 16/00

(54) **RADIO NETWORK CONTROL DEVICE AND RADIO NETWORK CONTROL METHOD**

(71) Applicant: Fujitsu Limited, Kawasaki-shi, Kanagawa 211-8588 (JP)
(72) Inventor: MOTOHASHI, Kayo, Kawasaki-shi Kanagawa 211-8588 (JP); HASHIMOTO, Masanori, Kawasaki-shi Kanagawa 211-8588 (JP); TEZUKA, Yasuo, Kawasaki-shi Kanagawa 211-8588 (JP); MIYAZAKI, Nao, Kawasaki-shi Kanagawa 211-8588 (JP); KUNIYOSHI, Hidekazu, Kawasaki-shi Kanagawa 211-8588 (JP)
(74) Representative: Lewin, David Nicholas
(86) International application number: PCT/JP2008/062273
(87) International publication number: WO 2010/004608

(57) **Abstract**

It is an object to provide a radio network control device and a radio network control method that allows some particular mobile terminals to access a particular mobile terminal, while prohibiting the other mobile terminals from accessing the particular mobile terminal. If TMSI included in a connection request is not stored in a subscriber-information storage unit (140), IMSI corresponding to the TMSI is acquired from a higher-level device and access control is performed for radio communications between a mobile terminal and a base station.

## Description

### TECHNICAL FIELD

The present invention relates to a radio network control device and a radio network control method.

### BACKGROUND ART

In accordance with a recent increase in the penetration rate of mobile terminals and a recent increase in the performance of mobile terminals, traffic increases in radio network systems. Therefore, in order to provide their subscribers with high-quality services, carriers that provide radio network systems install many BTSs (Base Transceiver Station: base station) and install a BTS that accommodates multiple cells having different frequency bands within the same area.

Moreover, in order to provide high-quality services over even a site having a weak radio field intensity, such as inside buildings and undergrounds, some carriers install a small BTS that accommodates a femtocell for a small area (hereinafter, small BTS").

There is a carriers' need for providing some particular subscribers with higher-quality services by allowing only the particular subscribers to access small BTSs. However, conventional radio network systems have no access control function that allows only some particular mobile terminals to access some particular BTSs (or small BTSs). Therefore, problems have arose that no mechanism cannot be build for providing only the particular subscribers with the small BTSs, the transmission rate decreases even if the small BTSs are accessible, and radio communication is unlikely to be established with the small BTSs.

A well-known base station stores registered user identification ID in a predetermined storage unit. When receiving an RRC (Radio Resource Control) connection request from a mobile terminal via an RACH (Random Access Channel), the base station determines whether ID (IMSI: International Mobile Subscriber Identity) included in the RACH coincides with the ID stored in the predetermined storage unit. If the IDs coincide with each other, the base station sends the RRC connection request to a higher-level device. If the IDs do not coincide, the base station deletes the RRC connection request. Thus, the user's mobile terminals can exclusively access the installed base station.

Patent Document 1 : Japanese Laid-open Patent Publication No. 2008-092381
Patent Document 2 : Japanese Laid-open Patent Publication No. 2008-079192
Patent Document 3: Japanese Laid-open Patent Publication No. 2005-065260

### DISCLOSURE OF INVENTION

### PROBLEM TO BE SOLVED BY THE INVENTION

However, some RRC connection requests received from mobile terminals (hereinafter, "connection request") include not IMSI but temporarily-assigned identification information (TMSI: Temporary Mobile Subscriber Identity) or the similar. It is often the case that the carrier cannot grasp the temporarily assigned identification information, such as TMSI, in advance; therefore, the carrier cannot register all the temporarily assigned identification information to the BTS. This is why, when receiving a connection request that includes temporarily assigned identification information, the conventional BTS cannot always perform access control. If access control is performed using some identification information different than IMSI or temporarily assigned identification information, such as TMSI, it is necessary to add a new function to existing mobile terminals.

Moreover, the above-described conventional technology has a problem that a particular subscriber that is in an area that includes multiple cells having different frequency bands cannot access the small BTS. More particularly, when a mobile terminal is in an area that includes multiple cells, the mobile terminal may perform cell selection not by measuring a frequency band different from the frequency band currently being used for radio communications but by measuring the same frequency band. This is because measurement of multiple frequency bands increases the power consumption of the mobile terminal. Moreover, to reduce the size, some small BTSs may use a signal frequency band or frequency bands narrower than that of peripheral cells. Therefore, when the mobile terminal is in radio communications using a frequency band different from the frequency band of a femtocell accommodated by a small BTS, even if the femtocell is present in the area, the mobile terminal cannot access the small BTS.

This is why, according to the above-described conventional technology, it is impossible to allow some particular mobile terminals to access a particular BTS, while prohibiting the other mobile terminals from accessing the particular BTS.

The disclosed technology has been achieved to solve the above problems with the conventional technologies and it is an object of the disclosed technology to provide a radio network control device and a radio network control method that allows some particular mobile terminals to access a particular base station, while prohibiting the other mobile terminals from accessing the particular base station.

### MEANS FOR SOLVING PROBLEM

To solve the problems described above and achive the object, a radio network control device disclosedin the present application requires a storage unit that stores therein, in association with identification information unique to a mobile terminal, base-station identification information for identifying a base station that is permitted to make radio communications with the mobile terminal; an acquiring unit that acquires, if identification information that is received from a certain mobile terminal is identification information that is temporarily assigned to the certain mobile terminal, unique identification information corresponding to the identification information from a higher-level device; and a radio-communications control unit that controls radio communications between the certain mobile terminal and a base station in accordance with base-station identification information corresponding to the acquired identification information unique to the certain mobile terminal stored in the storage unit.

Another available aspect is, for example, a method, device, system, computer program, storage medium, or data structure to which components, representation, or any combination of them of the radio network control device disclosed in the present application is (are) applied.

### EFFECT OF THE INVENTION

A radio network control device disclosed in the present application brings an effect of allowing some particular mobile terminals to access a particular base station, while prohibiting the other mobile terminals from accessing the particular base station.

### BRIEF DESCRIPTION OF DRAWINGS

FIG. 1 is a schematic diagram of an example of a radio access network that includes RNCs according to an embodiment.
FIG. 2 is a sequence diagram of a process flow performed by the devices included in the radio access network illustrated in FIG. 1.
FIG. 3 is a table of the frame format of an RRC CONNECTION REQUEST.
FIG. 4 is a table of the frame format of a MEASUREMENT CONTROL.
FIG. 5 is a schematic diagram of an example of a radio access network that includes RNCs according to an embodiment.
FIG. 6 is a sequence diagram of a process flow performed by the devices included in the radio access network illustrated in FIG. 5.
FIG. 7 is a sequence diagram of a process flow performed by the devices included in the radio access network when no individual channel is assigned to the mobile terminal.
FIG. 8 is a table of the frame format of an RRC CONNECTION REJECT.
FIG. 9 is a schematic diagram of an example of a radio access network that includes RNCs according to an embodiment.
FIG. 10 is a sequence diagram of a process flow performed by the devices included in the radio access network illustrated in FIG. 9.
FIG. 11 is a diagram of the configuration of the RNC according to an embodiment.
FIG. 12 is a table of an example of a subscriber-information storage unit.
FIG. 13 is a flowchart of an access control process performed by the RNC.
FIG. 14 is a schematic diagram of an example of a radio access network.

### EXPLANATIONS OF LETTERS OR NUMERALS

- 1, 2, 3, 9: Radio access network
- 10: CN
- 10a: Higher-level device
- 20, 20a to 20d: BTS
- 30, 30a to 30c: Small BTS
- 40 to 44: Mobile terminal
- 100, 100a to 100d: RNC
- 110: Transmission path I/F
- 120: Base station I/F
- 130: SW
- 140: Subscriber-information storage unit
- 150: Functional unit
- 151: Identification-information presence determining unit
- 152: Terminal-identification-information acquiring unit
- 153: Connection-requested object determining unit
- 154: Multiple-cell presence determining unit
- 155: Access-permission determining unit
- 156: Base-station identification-information acquiring unit
- 157: Frequency-band coincidence determining unit
- 158: Communications instruction unit

### BEST MODE(S) FOR CARRYING OUT THE INVENTION

Preferred embodiments of a radio network control device and a radio network control method disclosed in the present application will be explained in detail below with reference to accompanying drawings. The radio network control device and the radio network control method disclosed in the present application are not limited to these embodiments. Although, in the following examples, TMSI is used as temporarily assigned identification information indicative of a mobile terminal, some other identification information can be used, such as P-TMSI (Packet Temporary Mobile Subscriber Identity), LAI (Location Area Identification), and RAI (Routing Area Identification).

### Embodiment

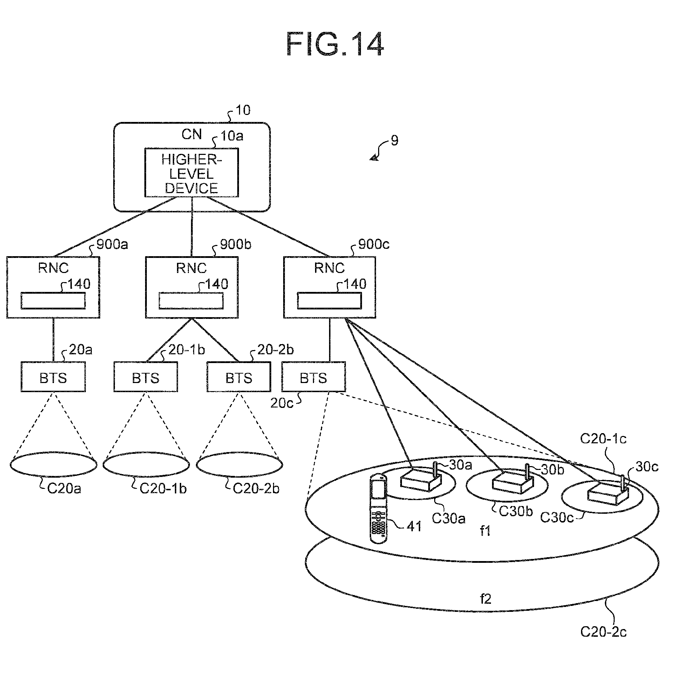

A radio network is described below according to the present embodiment. FIG. 14 is a schematic diagram of an example of a radio access network 9. As illustrated in FIG. 14, the radio access network 9 includes a CN (Core Network: core network) 10, radio network control devices (hereinafter, "RNC: Radio Network Controller") 900a to 900c, BTSs 20a, 20-1b, 20-2b, and 20c, small BTSs 30a to 30c, and a mobile terminal 41.

If, in the following description, it is needless to distinguish the RNCs 900a to 900c, these are expressed as "RNC 900", collectively. In the same manner, if it is needless to distinguish the BTS 20a and the similar, these are expressed as "BTS 20", collectively. In the same manner, if it is needless to distinguish the small BTSs 30a to 30c, these are expressed as small BTS 30", collectively.

The CN 10 is a large-volume wide area network including a higher-level device 10a. The higher-level device 10a performs position control, call control, and service control, and is, for example, a GMMS (Gateway Mobile Multimedia switching System), an LMMS (Local Mobile Multimedia switching System), a GGSN (Gateway GPRS (General Packet Radio Service) Support Node), and an SGSN (Serving GPRS Support Node). Moreover, the higher-level device 10a performs a process for assigning temporal identification information (TMSI in the present embodiment) to the mobile terminal 41, where the temporal identification information corresponds to identification information unique to the mobile terminal (IMSI) that is assigned to the mobile terminal as fixed information, and stores the temporarily assigned identification information (TMSI in the present embodiment) in a predetermined storage unit in association with the IMSI.

The RNC 900 is a communications control device that manages the BTS 20 and performs control processes that are needed to make radio communications. In the example illustrated in FIG. 14, the RNC 900a manages the BTS 20a; the RNC 900b manages the BTSs 20-1b and 20-2b; and the RNC 900c manages the BTS 20c and the small BTSs 30a to 30c. As just described, the RNC 900 can manage multiple BTSs.

The BTS 20 is a communications device that covers a cell, which is a radio communication area having a predetermined area, and makes radio communications between the mobile terminal 41 or the similar that is present in its cell. In the example illustrated in FIG. 14, the BTS 20a covers a cell C20a; the BTS 20-1b covers a cell C20-1b; the BTS 20-2b covers a cell C20-2b; and the BTS 20c covers cells C20-1c and C20-2c. As just described, the BTS 20 can cover multiple cells having different frequency bands within the same area. In the example illustrated in FIG. 14, the frequency band of the cell C20-1c is f1, and the frequency band of the cell C20-2c is f2.

The small BTS 30 is a communications device that covers a femtocell and makes radio communications with the mobile terminal 41 and the similar that is present in its femtocell. In the example illustrated in FIG. 14, the small BTS 30a covers a femtocell C30a; the small BTS 30b covers a femtocell C30b; and the small BTS 30c covers a femtocell C30c. In the example illustrated in FIG. 14, the frequency band of the femtocells C30a to C30c is f1. In other words, in the example illustrated in FIG. 14, the frequency band of the cell C20-1c of the BTS 20c is equal to the frequency band of the femtocells C30a to C30c of the small BTSs 30a to 30c.

The mobile terminal 41 is a mobile radio communications device, for example, a mobile phone terminal. The mobile terminal 41 makes communications with another mobile terminal or the similar via the BTS 20 that covers a cell where the mobile terminal 41 is present or a small BTS 30 that covers a femtocell where the mobile terminal 41 is present. If, for example, the mobile terminal 41 is present in an area that includes the cell C20a, the mobile terminal 41 makes communications with another mobile terminal or the similar via the BTS 20a.

If, in the example illustrated FIG. 14 for example, the mobile terminal 41 is present in an area that includes the cell C20-1c or the cell C20-2c, the mobile terminal 41 makes communications with another mobile terminal or the similar via the BTS 20c or the small BTS 30. In this case, which radio base station and which cell the mobile terminal 41 accesses is determined in accordance with broadcast information (BCH: Broadcast Channel) received from the RNC 900c.

More particularly, System information included in the broadcast information has an item of frequency band (hereinafter, "specified frequency band"). If "frequency band f1" is set to the specified frequency band, the mobile terminal 41 measures the received signal intensity of a signal received from the BTS 20c, because it covers the cell C20-1c having the frequency band f1, and the received signal intensity of a signal received from the small BTS 30, because it covers the femtocells C30a to C30c having the frequency band f1. The mobile terminal 41 then sends the measured received signal intensities to the RNC 900c. Upon receiving the measurement result, the RNC 900c instructs the mobile terminal 41 to make radio communications with either the BTS 20c or the small BTS 30 using a cell or a femtocell having the highest received signal intensity.

If "frequency band f2" is set to the specified frequency band included in the broadcast information, the mobile terminal 41 measures the received signal intensity of a signal received from the BTS 20c, because it covers the cell C20-2c having the frequency band f2, and sends the measurement result to the RNC 900c. Upon receiving the measurement result, if the measurement result is a specified value or higher, the RNC 900c instructs the mobile terminal 41 to make radio communications with the BTS 20c.

In some cases, the RNC 900 sends broadcast information so as to measure, for an area that includes multiple cells having different frequency bands, the received signal intensity of one frequency band. In the example illustrated in FIG. 14, the RNC 900c sends broadcast information to the mobile terminal 41 that is present in the area of the cells C20-1c and C20-2c so as to measure the received signal intensity of either the frequency band f1 or the frequency band f2. This is because if the mobile terminal 41 measures the received signal intensities of multiple frequency bands, the power consumption of the mobile terminal 41 increases.

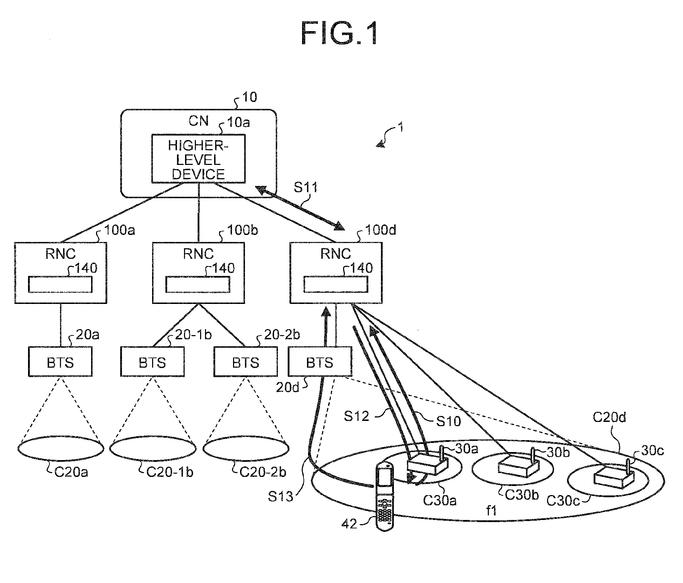

According to the present embodiment, the RNC allows some particular mobile terminals to access a particular BTS, while prohibiting the other mobile terminals from accessing the particular BTS. The outline of the RNC according to the present embodiment is described with reference to FIGS. 1 to 10. The following processes are described in this order that include: (1) process performed by the RNC when receiving, from a mobile terminal that is present in an area that includes a cell or a femtocell having one frequency band, a connection request for making radio communications with a small BTS, (2) process performed by the RNC when receiving, from a mobile terminal that is present in an area that includes cells or femtocells having two frequency bands, a connection request for making radio communications with a BTS, and (3) process performed by the RNC when receiving, from a mobile terminal that is present in an area that includes cells or femtocells having two frequency bands, a connection request for making radio communications with a small BTS.

The process performed by the RNC in the situation (1) is described below when receiving, from a mobile terminal that is present in the area of a cell or a femtocell having one frequency band, a connection request for making radio communications with a small BTS. FIG. 1 is a schematic diagram of an example of a radio access network 1 that includes RNCs 100a to 100c according to the present embodiment. In the following, the components that have the same functions of those illustrated in FIG. 14 are denoted with the same reference numerals and the detailed description is omitted.

The radio access network 1 illustrated in FIG. 1 includes a BTS 20d instead of the BTS 20c that is included in the radio access network 9 illustrated in FIG. 14. The BTS 20d covers a cell C20d having the frequency band f1.

Moreover, the radio access network 1 illustrated in FIG. 1 includes the RNCs 100a, 100b, and 100d instead of the RNCs 900 included in the radio access network 9 illustrated in FIG. 14. If, in the following description, it is needless to distinguish the RNC 100a and the similar, these are expressed as "RNC 100", collectively.

The RNC 100 includes a subscriber-information storage unit 140 that stores therein various pieces of information about subscribers. The subscriber-information storage unit 140 stores therein IMSI and TMSI of a mobile terminal, identification information (hereinafter, "small-BTS identification information") for identifying the small BTS 30 that is permitted to make radio communications with the mobile terminal, and identification information (hereinafter, "peripheral-BTS identification information") for identifying a BTS (hereinafter, "peripheral BTS") that covers a cell within an area that includes an area of a femtocell that is covered by the small BTS 30, in an associated manner. In the example illustrated in FIG. 1, the BTS 20d is a peripheral BTS of the small BTSs 30a to 30c. If, in the following, it is needless to distinguish IMSI from TMSI, these are expressed as "terminal identification information", collectively.

In the example illustrated in FIG. 1, a mobile terminal 42 is instructed to measure the received signal intensity of the frequency band f1. Moreover, as illustrated in FIG. 1, the mobile terminal 42 is present in the femtocell C30a. Moreover, the mobile terminal 42 is not permitted to make radio communications with the small BTS 30a.

Under the above conditions, when the mobile terminal 42 that is present in the femtocell C30a makes communications with another mobile terminal, the mobile terminal 42 sends a connection request to the RNC 100d to make radio communications with the small BTS 30a (Step S10). Upon receiving the connection request, if terminal identification information included in the connection request is TMSI, the RNC 100d determines whether the TMSI is stored in the subscriber-information storage unit 140. If the TMSI included in the connection request is not stored in the subscriber-information storage unit 140, the RNC 100d acquires, from the higher-level device 10a, IMSI corresponding to the TMSI that is included in the connection request (Step S11).

After that, the RNC 100d determines whether the mobile terminal 42 is present in an area that includes multiple cells having different frequency bands. If, as in the example illustrated in FIG. 1, the mobile terminal 42 is not present in an area that includes multiple cells having different frequency bands, the RNC 100d permits the mobile terminal 42 to make radio communications with the small BTS 30a, regardless whether radio communications are permitted between the mobile terminal 42 and the small BTS 30a. This enables assigning an individual channel (DCH: Dedicated Channel) to the mobile terminal 42, thereby sending instructions, such as an instruction to measure the received signal intensity and a handover instruction, to only the mobile terminal 42.

After that, the RNC 100d determines, in accordance with the information stored in the subscriber-information storage unit 140, whether radio communications are permitted between the mobile terminal 42 and the small BTS 30a. In the example illustrated in FIG. 1, radio communications are not permitted between the mobile terminal 42 and the small BTS 30a; therefore, the RNC 100d instructs the mobile terminal 42 to make radio communications with the BTS 20d (Step S12). Upon receiving the instruction, the mobile terminal 42 makes communications with another mobile terminal or the similar via the BTS 20d (Step S13).

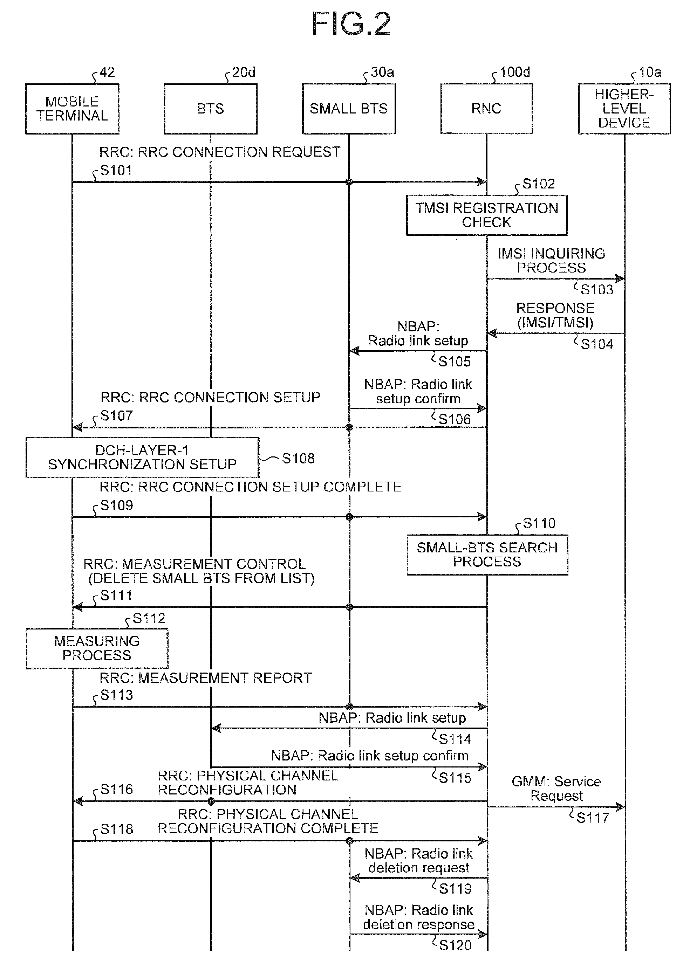

The flow of the above process is described in the concrete with reference to FIG. 2. FIG. 2 is a sequence diagram of the process flow performed by the devices included in the radio access network 1 illustrated in FIG. 1.

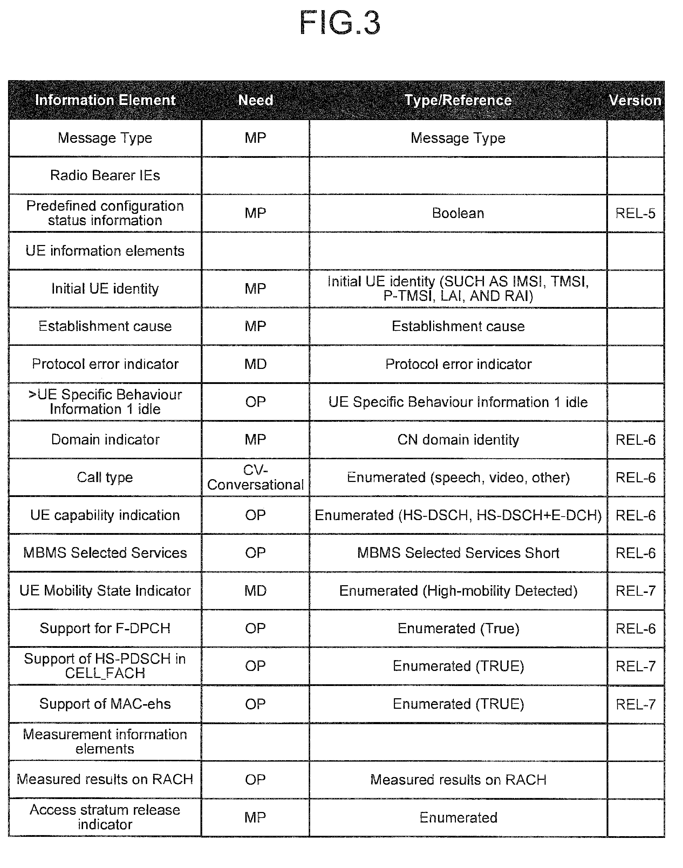

As illustrated in FIG. 2, the mobile terminal 42 sends an RRC CONNECTION REQUEST (connection request) to the RNC 100d via the small BTS 30a (Step S101). FIG. 3 illustrates the frame format of an RRC CONNECTION REQUEST. As illustrated in FIG. 3, the RRC CONNECTION REQUEST includes an item "Initial UE identity". The mobile terminal 42 sets the terminal identification information (IMSI or TMSI) for identifying the mobile terminal 42 to Initial UE identity and sends the RRC CONNECTION REQUEST.

Upon receiving the connection request, if the terminal identification information included in the connection request is TMSI, the RNC 100d determines whether the TMSI is stored in the subscriber-information storage unit 140 (Step S102). If the TMSI is not stored in the subscriber-information storage unit 140, the RNC 100d sends an inquiry for IMSI corresponding to the TMSI to the higher-level device 10a (Step S103), and acquires IMSI corresponding to the TMSI from the higher-level device 10a (Step S104). If IMSI is included in the connection request or if the TMSI included in the connection request is stored in the subscriber-information storage unit 140, the RNC 100d does not perform the above-described IMSI acquiring process.

After that, the RNC 100d sends a Radio link setup to the small BTS 30a (Step S105). The RNC 100d then receives a Radio link setup confirm from the small BTS 30a (Step S106), thereby establishing a radio link (Radio link) with the small BTS 30a.

After that, the RNC 100d sends an RRC CONNECTION SETUP to the mobile terminal 42 via the small BTS 30a (Step S107). An individual channel is then assigned to the mobile terminal 42 (Step S108). After that, the mobile terminal 42 sends an RRC CONNECTION SETUP COMPLETE to the RNC 100d to notify that the mobile terminal 42 is connected to the small BTS 30a (Step S109).

After that, the RNC 100d acquires information from the subscriber-information storage unit 140 by the terminal identification information included in the connection request or the IMSI acquired from the higher-level device 10a. The RNC 100d then determines, in accordance with the acquired information, whether radio communications are permitted between the mobile terminal 42 and the small BTS 30a (Step S110). In this example, the RNC 100d determines that radio communications are not permitted between the mobile terminal 42 and the small BTS 30a.

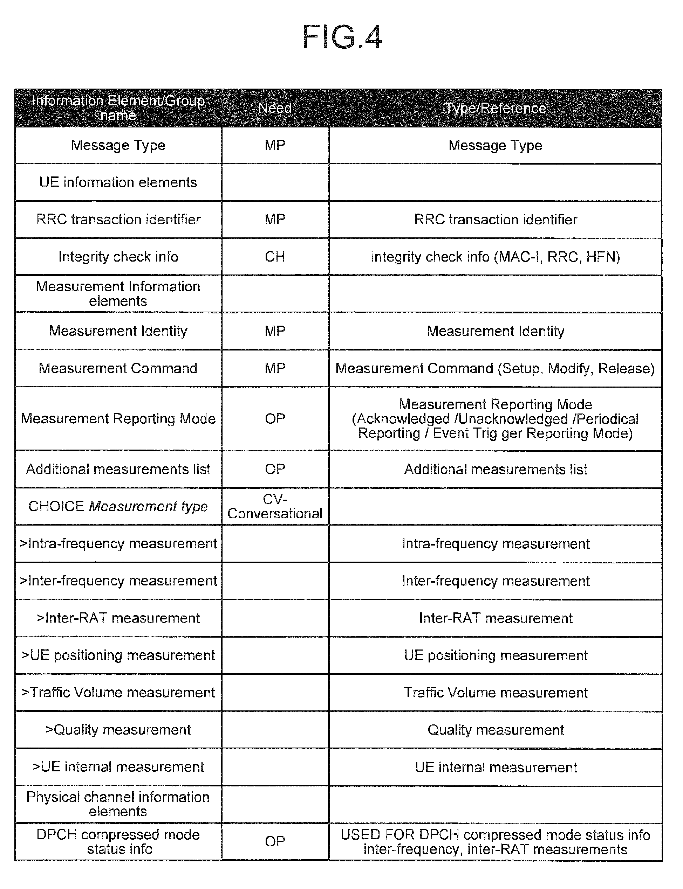

After that, the RNC 100d sends a MEASUREMENT CONTROL to the mobile terminal 42 so as to make radio communications between the mobile terminal 42 and a BTS or a small BTS that is different from the small BTS 30a (Step S111). FIG. 4 illustrates the frame format of a MEASUREMENT CONTROL. As illustrated in FIG. 4, a MEASUREMENT CONTROL includes an item "Additional measurements list". The RNC 100d sends a MEASUREMENT CONTROL without setting the small BTS 30a to Additional measurements list. Because the MEASUREMENT CONTROL is sent via the individual channel, the RNC 100d can instruct only the mobile terminal 42 to access a BTS or a small BTS that is different from the small BTS 30a.

Upon receiving the MEASUREMENT CONTROL, the mobile terminal 42 measures the received signal intensity of the cell C20d having the frequency band f1 (Step S112). After that, the mobile terminal 42 sends a MEASUREMENT REPORT to the RNC 100d, thereby sending the measured received signal intensity (Step Sal13).

Upon receiving the MEASUREMENT REPORT, if the measured received signal intensity is a specified value or higher, the RNC 100d causes the mobile terminal 42 to access the BTS 20d that covers the cell C20d.

More particularly, the RNC 100d sends a Radio link setup to the BTS 20d (Step S114). The RNC 100d then receives a Radio link setup confirm from the BTS 20d (Step S115), thereby establishing a radio link with the BTS 20d. After that, the RNC 100d sends a PHYSICAL CHANNEL RECONFIGURATION to the mobile terminal 42 so as to perform a handover from the femtocell C30a to the cell C20d (Step S116). Because the PHYSICAL CHANNEL RECONFIGURATION is sent via the individual channel, the RNC 100d can instruct only the mobile terminal 42 to perform handover.

Moreover, the RNC 100d sends a Service Request to the higher-level device 10a (Step S117), thereby building an SCCP (Signaling Connection Control Part) connection.

Upon receiving the PHYSICAL CHANNEL RECONFIGURATION, in order to notify the handover process is completed, the mobile terminal 42 sends a PHYSICAL CHANNEL RECONFIGURATION COMPLETE to the RNC 100d (Step S118). After that, the mobile terminal 42 makes communications with another mobile terminal or the similar via the BTS 20d.

After that, the RNC 100d sends a Radio link deletion request to the small BTS 30a (Step S119). The RNC 100d then receives a Radio link deletion response from the small BTS 30a (Step S120). The RNC 100d thus deletes the radio link with the small BTS 30a.

If radio communications are permitted between the mobile terminal 42 and the small BTS 30a, the RNC 100d does not cause the mobile terminal 42 to perform the handover process. In this case, the mobile terminal 42 makes communications with another mobile terminal via the small BTS 30a.

As described above, according to the present embodiment, if TMSI included in the connection request is not stored in the subscriber-information storage unit 140, the RNC 100 acquires IMSI corresponding to the TMSI from the higher-level device 10a; therefore, whether radio communications are permitted between the mobile terminal and the small BTS is determined correctly. Thus, the RNC 100 prohibits the mobile terminals other than some particular mobile terminals from accessing a particular BTS.

Moreover, according to the present embodiment, when receiving a connection request from a mobile terminal, the RNC 100 assigns an individual channel to the mobile terminal and then causes the mobile terminal to perform the handover process; therefore, the RNC 100 can perform access control over only the target mobile terminal without affecting the other mobile terminals.

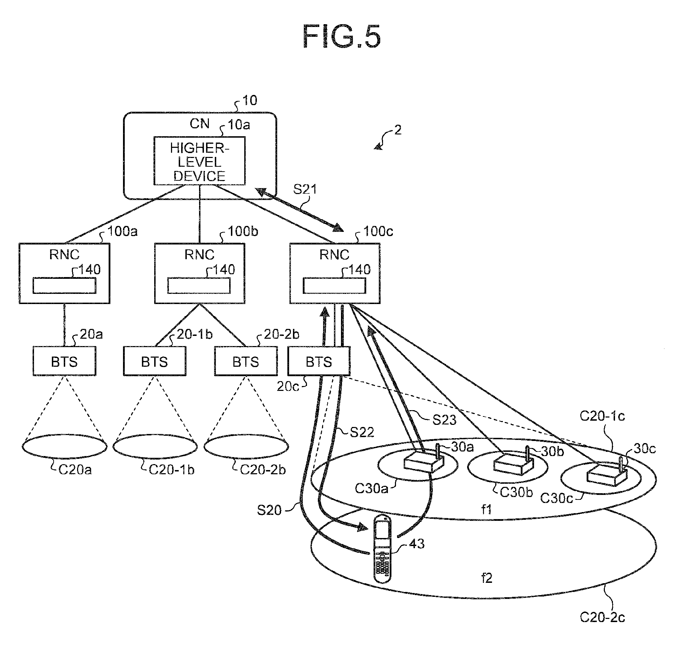

The process performed by the RNC in the situation (2) is described below when receiving, from a mobile terminal that is present in an area that includes cells or femtocells having two frequency bands, a connection request for making radio communications with a BTS. FIG. 5 is a schematic diagram of an example of a radio access network 2 that includes the RNCs 100a to 100c according to the present embodiment. The radio access network 2 illustrated in FIG. 5 includes the RNCs 100a to 100c instead of the RNCs 900 included in the radio access network 9 illustrated in FIG. 14.

In the example illustrated in FIG. 5, a mobile terminal 43 is instructed to measure the received signal intensity of the frequency band f2. Moreover, as illustrated in FIG. 5, the mobile terminal 43 is present in the cell C20-2c. Moreover, the mobile terminal 43 is not permitted to make radio communications with the small BTS 30a.

Under the above conditions, when the mobile terminal 43 that is present in the cell C20-2c makes communications with another mobile terminal, the mobile terminal 43 sends a connection request to the RNC 100c via the cell C20-2c to make radio communications with the small BTS 30a (Step S20). Upon receiving the connection request, in the same manner as in the example illustrated in FIG. 1, if TMSI included in the connection request is not stored in the subscriber-information storage unit 140, the RNC 100c acquires IMSI corresponding to the TMSI that is included in the connection request (Step S21).

After that, the RNC 100c permits the mobile terminal 43 to access the BTS 20c. With this permission, an individual channel is assigned to the mobile terminal 43, which enables the RNC 100c to send instructions, such as an instruction to measure the received signal intensity, to only the mobile terminal 43. After that, the RNC 100c determines, in accordance with information stored in the subscriber-information storage unit 140, whether any small BTS is present that is permitted to make radio communications with the mobile terminal 43, has the BTS 20c as a peripheral BTS, and covers a femtocell having a different frequency band from the frequency band f2 that is the target frequency band to be measured by the mobile terminal 43.

In the example illustrated in FIG. 5, the small BTS 30a is present that is permitted to make radio communications with the mobile terminal 43, has the BTS 20c as a peripheral BTS, and covers the femtocell C30a having the frequency band f1 different from the frequency band f2; therefore, the RNC 100c instructs the mobile terminal 43 to measure the received signal intensity of the frequency band f1 (Step S22).

Upon receiving the measurement instruction, the mobile terminal 43 measures the received signal intensity of the frequency band f1 and sends the measurement result to the RNC 100c. The mobile terminal 43 then makes radio communications with a cell or a femtocell that is determined by the RNC 100c to have the highest received signal intensity. In this example, the RNC 100c determines that the femtocell 30a has the highest received signal intensity. In this case, the mobile terminal 43 makes communications with another mobile terminal or the similar via the small BTS 30a (Step S23).

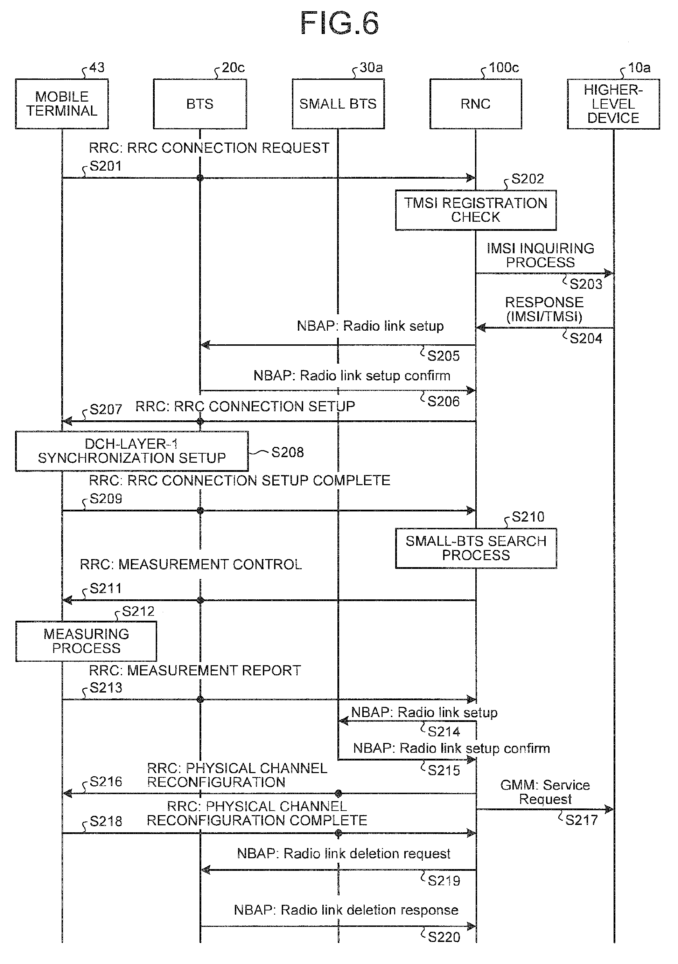

The flow of the above process is described in the concrete with reference to FIG. 6. FIG. 6 is a sequence diagram of the process flow performed by the devices included in the radio access network 2 illustrated in FIG. 5.

As illustrated in FIG. 6, the mobile terminal 43 sends an RRC CONNECTION REQUEST (connection request) to the RNC 100c via the BTS 20c (Step S201). Upon receiving the connection request, the RNC 100c performs the IMSI acquiring process in the same manner as in the example illustrated in FIG. 2 (Steps S202 to S204).

After that, the RNC 100c sends a Radio link setup to the BTS 20c (Step S205), receives a Radio link setup confirm from the BTS 20c (Step S206), and establishes a radio link with the BTS 20c. After that, the RNC 100c sends an RRC CONNECTION SETUP to the mobile terminal 43 via the BTS 20c (Step S207), thereby assigning an individual channel to the mobile terminal 43 (Step S208). After that, the mobile terminal 43 sends an RRC CONNECTION SETUP COMPLETE to the RNC 100c (Step S209).

After that, the RNC 100c determines, in accordance with information stored in the subscriber-information storage unit 140, whether any small BTS is present that is permitted to make radio communications with the mobile terminal 43, has the BTS 20c as a peripheral BTS, and covers a femtocell having a different frequency band from the frequency band f2 (Step S210). In this example, the RNC 100c determines that a small BTS that satisfies the above conditions or the small BTS 30a is present.

After that, in order to measure the received signal intensity of the frequency band f1, where the frequency band f1 is the frequency band of the femtocell C30a that is covered by the small BTS 30a that satisfies the above conditions, the RNC 100c sends a MEASUREMENT CONTROL to the mobile terminal 43 (Step 5211). More particularly, the RNC 100c sets the frequency band f1 to the item "Inter-frequency measurement" included in a MEASUREMENT CONTROL (see FIG. 4) and sends the MEASUREMENT CONTROL. With this configuration, the RNC 100c causes the mobile terminal 43 to measure the received signal intensity of the frequency band f1.

Upon receiving the MEASUREMENT CONTROL, the mobile terminal 43 measures the received signal intensity of the frequency band f1 (Step S212). In this example, the mobile terminal 43 measures both the received signal intensity of the cell C20-1c and the received signal intensity of the femtocell C30a. After that, the mobile terminal 43 sends a MEASUREMENT REPORT to the RNC 100c, thereby sending the measured received signal intensities (Step S213).

Upon receiving the MEASUREMENT REPORT, the RNC 100c selects, in accordance with the measurement result, a cell or a femtocell having a higher received signal intensity from the cell C20-1c and the femtocell C30a or selects, if the received signal intensity high enough to make communications, the femtocell C30a because of priority access to a femtocell. In this example, the received signal intensity of the femtocell C30a is higher than the received signal intensity of the cell C20-1c. Therefore, the RNC 100c causes the mobile terminal 43 to access the small BTS 30a that accommodates the femtocell C30a.

More particularly, the RNC 100c sends a Radio link setup to the small BTS 30a (Step S214). The RNC 100c then receives a Radio link setup confirm from the small BTS 30a (Step S215), thereby establishing a radio link with the small BTS 30a.

After that, the RNC 100c sends a PHYSICAL CHANNEL RECONFIGURATION to the mobile terminal 43 so as to perform a handover from the cell C20-2c to the femtocell C30a (Step S216). Moreover, the RNC 100c sends a Service Request to the higher-level device 10a (Step S217), thereby building an SCCP connection.

Upon receiving the PHYSICAL CHANNEL RECONFIGURATION, the mobile terminal 43 sends a PHYSICAL CHANNEL RECONFIGURATION COMPLETE to the RNC 100c to notify that the handover process is completed (Step S218). After that, the mobile terminal 43 makes communications with another mobile terminal or the similar via the small BTS 30a.

After that, the RNC 100c sends a Radio link deletion request to the BTS 20c (Step S219), receives a Radio link deletion response from the BTS 20c (Step S220), and deletes the radio link with the BTS 20c.

If, at Step S210, no small BTS 30 is present that satisfies the above conditions, the RNC 100c does not cause the mobile terminal 43 to perform the handover process. If so, the mobile terminal 43 makes communications with another mobile terminal via the BTS 20c.

As described above, according to the present embodiment, when receiving a connection request from a mobile terminal that is present in an area that includes cells or femtocells having multiple frequency bands, the RNC 100 instructs the mobile terminal to measure the received signal intensity of the frequency band of a femtocell covered by a small BTS that satisfies the above conditions; therefore, the RNC 100 can cause the mobile terminal to access the small BTS 30. With this configuration, the RNC 100 can cause the some particular mobile terminals to access the particular BTS.

Although, in the example illustrated in FIG. 6, the MEASUREMENT CONTROL that is sent to the mobile terminal 43 via the individual channel that has been assigned to the mobile terminal makes the mobile terminal 43 access the small BTS 30a, the RNC 100c can cause the mobile terminal 43 to access the small BTS 30a without assigning an individual channel.

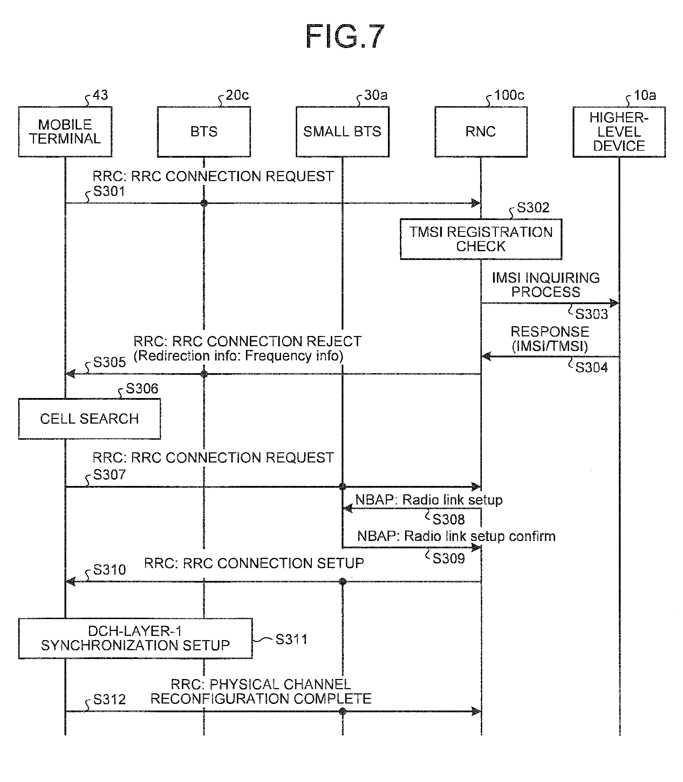

Another example is described with reference to FIG. 7. FIG. 7 is a sequence diagram of the process flow performed by the devices included in the radio access network 2 when no individual channel is assigned to the mobile terminal 43.

As illustrated in FIG. 7, the mobile terminal 43 sends an RRC CONNECTION REQUEST to the RNC 100c (Step S301). Upon receiving the connection request, the RNC 100c performs the IMSI acquiring process (Steps S302 to S304).

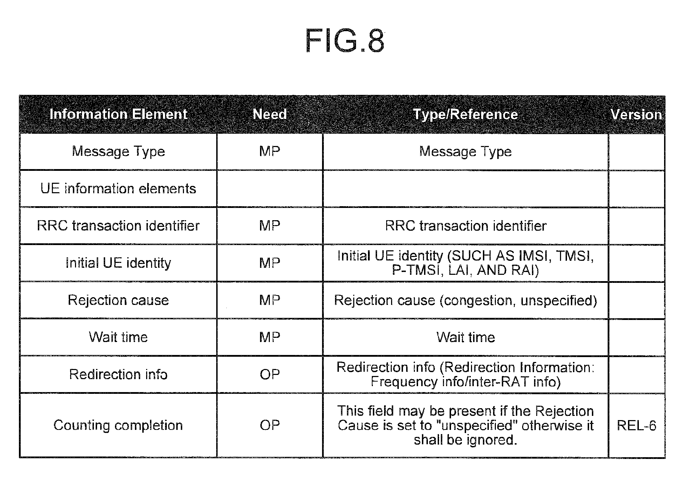

After that, the RNC 100c sends an RRC CONNECTION REJECT to the mobile terminal 43 to make radio communications using a cell or a femtocell having the frequency band f1 (Step S305). FIG. 8 illustrates the frame format of an RRC CONNECTION REJECT. As illustrated in FIG. 8, the RRC CONNECTION REJECT includes an item "Redirection info". The RNC 100c sets the frequency band f1 to the Redirection info and sends the RRC CONNECTION REJECT. Because the RRC CONNECTION REJECT is sent via the individual channel, the RNC 100c can instruct only the mobile terminal 43 to make radio communications using a cell or a femtocell having the frequency band f1.

Upon receiving the RRC CONNECTION REJECT, the mobile terminal 43 searches for any cell having the frequency band f1 (Step S306). In this example, the mobile terminal 43 catches the femtocell C30a. After that, the mobile terminal 43 sends an RRC CONNECTION REQUEST to the RNC 100c to make radio communications with the small BTS 30a via the femtocell C30a that has the frequency band f1 (Step S307).

Upon receiving the RRC CONNECTION REQUEST, the RNC 100c sends a Radio link setup to the small BTS 30a (Step S308), and receives a Radio link setup confirm from the small BTS 30a (Step S309), thereby establishing a radio link with the BTS 20c.

After that, the RNC 100c sends an RRC CONNECTION SETUP to the mobile terminal 43 via the small BTS 30a (Step S310), thereby assigning an individual channel to the mobile terminal 43 (Step S311). After that, the mobile terminal 43 sends an RRC CONNECTION SETUP COMPLETE to the RNC 100c (Step S312).

As described above, by sending an RRC CONNECTION REJECT to the mobile terminal 43, the RNC 100c causes the mobile terminal 43 to access the small BTS 30a without assigning an individual channel.

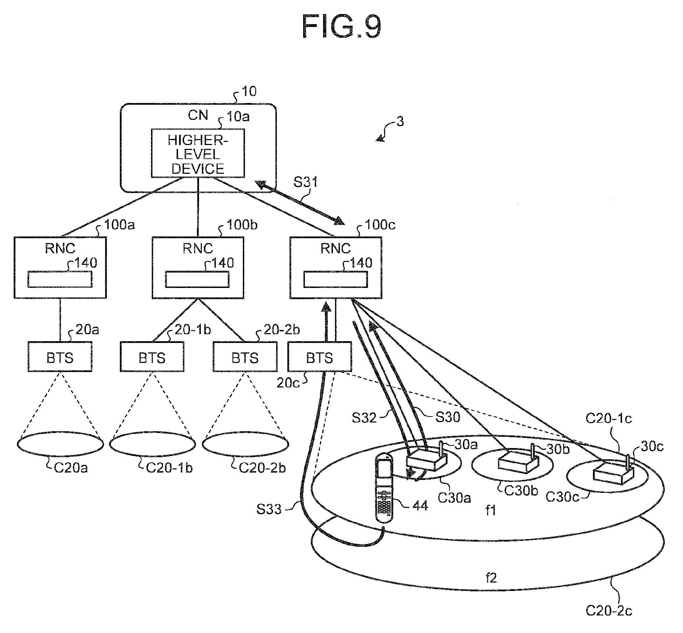

The process performed by the RNC in the situation (3) is described below when receiving, from a mobile terminal that is present in an area that includes cells or femtocells having two frequency bands, a connection request for making radio communications with a small BTS. FIG. 9 is a schematic diagram of an example of a radio access network 3 that includes the RNCs 100a to 100c according to the present embodiment. The radio access network 3 illustrated in FIG. 9 includes the same components as those included in the radio access network 2 illustrated in FIG. 5.

In the example illustrated in FIG. 9, a mobile terminal 44 is instructed to measure the received signal intensity of the frequency band f1. Moreover, as illustrated in FIG. 9, the mobile terminal 44 is present in the femtocell C30a. Moreover, the mobile terminal 44 is not permitted to make radio communications with the small BTS 30a.

Under the above conditions, when the mobile terminal 44 that is present in the femtocell C30a makes communications with another mobile terminal, the mobile terminal 44 sends a connection request to the RNC 100c to make radio communications with the small BTS 30a (Step S30). Upon receiving the connection request, in the same manner as in the example illustrated in FIG. 1, if TMSI included in the connection request is not stored in the subscriber-information storage unit 140, the RNC 100c acquires IMSI corresponding to the TMSI that is included in the connection request (Step S31).

After that, the RNC 100c determines whether the mobile terminal 44 is in an area that includes multiple cells having different frequency bands. In the example illustrated in FIG. 9, the mobile terminal 44 is in the area that includes the cells C20-1c and C20-2c having different frequency bands; therefore, the RNC 100c determines, in accordance with information stored in the subscriber-information storage unit 140, whether radio communications are permitted between the mobile terminal 44 and the small BTS 30a.

In the example illustrated in FIG. 9, radio communications are not permitted between the mobile terminal 44 and the small BTS 30a; therefore, the RNC 100c instructs the mobile terminal 44 to measure the received signal intensity of the frequency band f2 that is different from the frequency band f1 or the target frequency band to be measured currently (Step S32).

Upon receiving the measurement instruction, the mobile terminal 44 measures the received signal intensity of the frequency band f2 of the cell C20-2c and sends the measurement result to the RNC 100c. If the RNC 100c determines that the received signal intensity is a specified value or higher, the mobile terminal 44 makes communications with the BTS 20c via the cell C20-2c, thereby making communications with another mobile terminal or the similar (Step S33).

The reason why the mobile terminal is instructed to access the cell C20-2c is described below. In the example illustrated in FIG. 9, the mobile terminal 44 is not permitted to access the small BTS 30a; however, it is possible to cause the mobile terminal 44 to make radio communications via the cell C20-1c. The RNC 100c needs to instruct the mobile terminal 44 to access the cell C20-1c each time when receiving a connection request from the mobile terminal 44 to access the small BTS 30a. On the other hand, once the mobile terminal 44 is instructed to access the cell C20-2c, because subsequent connection requests to access the cell C20-2c are received from the mobile terminal 44, the RNC 100c does not need to instruct the mobile terminal 44 to access another cell in response to each connection request. Therefore, the processing load on the RNC 100c is decreased.

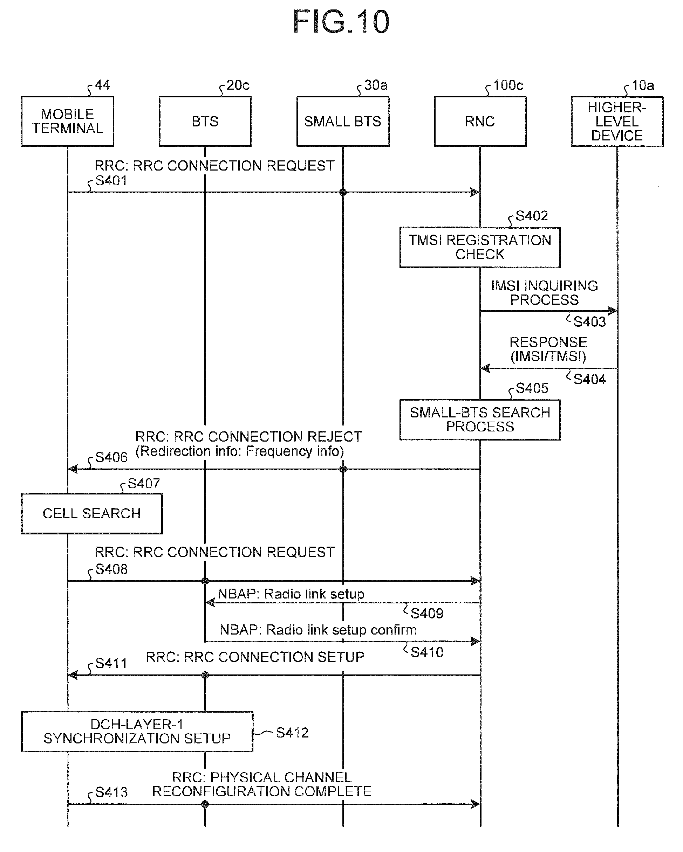

The flow of the above process is described in the concrete with reference to FIG. 10. FIG. 10 is a sequence diagram of the process flow performed by the devices included in the radio access network 3 illustrated in FIG. 9.

As illustrated in FIG. 10, the mobile terminal 44 sends an RRC CONNECTION REQUEST to the RNC 100c via the small BTS 30a (Step S401). Upon receiving the connection request, the RNC 100c performs the IMSI acquiring process in the same manner as in the example illustrated in FIG. 6 (Steps S402 to S404).

After that, the RNC 100c determines, in accordance with information stored in the subscriber-information storage unit 140, whether radio communications are permitted between the mobile terminal 44 and the small BTS 30a (Step S405). In this example, the RNC 100c determines that radio communications are not permitted between the mobile terminal 44 and the small BTS 30a.

After that, the RNC 100c sends an RRC CONNECTION REJECT to the mobile terminal 44 to make radio communications via a cell or a femtocell having the frequency band f2 (Step S406). More particularly, the RNC 100c sets the frequency band f2 to the Redirection info and sends the RRC CONNECTION REJECT.

Upon receiving the RRC CONNECTION REJECT, the mobile terminal 44 searches for any cell having the frequency band f2 and catches the cell C20-2c (Step 5407). After that, the mobile terminal 44 sends an RRC CONNECTION REQUEST to the RNC 100c to make radio communications with the BTS 20c via the cell C20-2c having the frequency band f2 (Step S408).

Upon receiving the RRC CONNECTION REQUEST, the RNC 100c sends a Radio link setup to the BTS 20c (Step S409), receives a Radio link setup confirm from the BTS 20c (Step S410), and establishes a radio link with the BTS 20c.

After that, the RNC 100c sends an RRC CONNECTION SETUP to the mobile terminal 44 via the BTS 20c (Step S411) and assigns an individual channel to the mobile terminal 44 (Step S412). After that, the mobile terminal 44 sends an RRC CONNECTION SETUP COMPLETE to the RNC 100c (Step S413).

As described above, according to the present embodiment, when the RNC 100 receives a connection request from a mobile terminal that is in an area that includes multiple cells or femtocells having different frequency bands to access the small BTS 30, the RNC 100 determines whether radio communications are permitted between the mobile terminal and the small BTS 30. If radio communications are not permitted between the mobile terminal and the small BTS 30, the RNC 100 instructs the mobile terminal to make radio communications with another cell or a femtocell having a different frequency band; thus, the RNC 100 prohibits the mobile terminals other than some particular mobile terminals from accessing a particular BTS without instructing, in response to each connection request, the mobile terminal to access another cell.

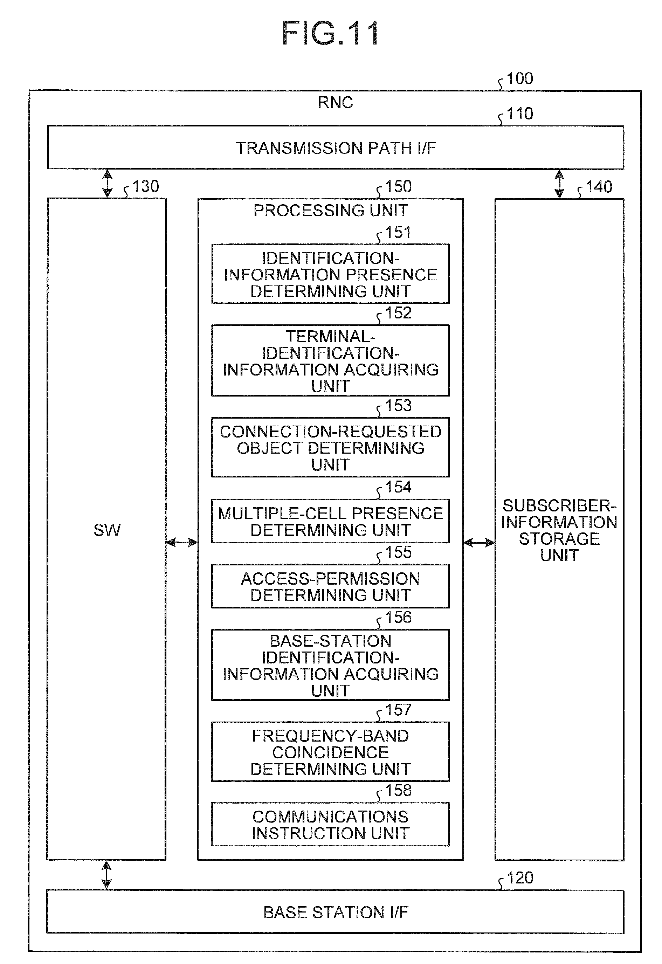

The configuration of the RNC 100 according to the present embodiment is described below. FIG. 11 is a diagram of the configuration of the RNC 100 according to the present embodiment. FIG. 11 illustrates components necessary for the RNC 100 to perform access control according to the present embodiment.

As illustrated in FIG. 11, the RNC 100 includes a transmission path interface (hereinafter, "I/F") 110, a base station I/F 120, a switch unit (hereinafter, "SW") 130, the subscriber-information storage unit 140, and a processing unit 150.

The transmission path I/F 110 is an interface that is used to send/receive information to/from the higher-level device 10a. The base station I/F 120 is an interface that is used to send/receive information to/from the BTS 20 and the small BTS 30.

The SW 130 transfers various signals within the RNC 100 and is, for example, an ATM (Asynchronous Transfer Mode)-SW. The SW 130 is connected to the transmission path I/F 110, the base station I/F 120, and the processing unit 150. Signals are sent/received to/from the functional units via the SW 130.

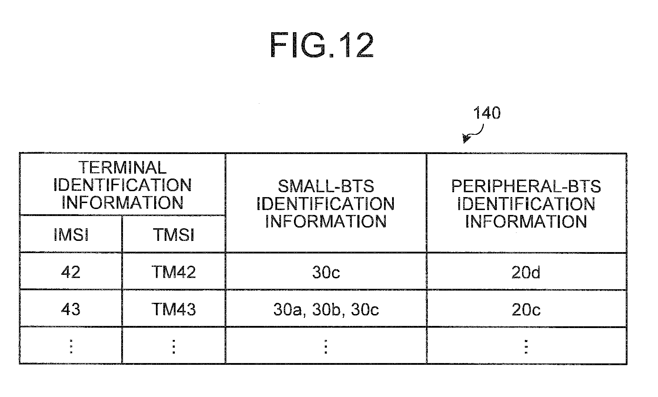

The subscriber-information storage unit 140 stores therein, in association with each mobile terminal, information etc., related to a small BTS that is permitted to make radio communications with the mobile terminal. FIG. 12 illustrates an example of the subscriber-information storage unit 140. As illustrated in FIG. 12, the subscriber-information storage unit 140 includes items "terminal identification information", "small-BTS identification information", and "peripheral-BTS identification information".

The terminal identification information is identification information for identifying a mobile terminal 40 and includes IMSI and TMSI in associated manner. TMSI is identification information temporarily assigned by the higher-level device; therefore, there is a possibility that TMSI is not stored in the subscriber-information storage unit 140. The subscriber-information storage unit 140 illustrated in FIG. 12 stores therein the reference numerals denoted with the small BTSs as illustrated in FIGS. 1, 5, and 9 as IMSI.

The small-BTS identification information is identification information for identifying a small BTS that is permitted to make radio communications with a mobile terminal that is indicated by the corresponding terminal identification information. The subscriber-information storage unit 140 illustrated in FIG. 12 stores therein the reference numerals denoted with the small BTS illustrated in FIGS. 1, 5, and 9 as small-BTS identification information.

The peripheral-BTS identification information is identification information for identifying a BTS that covers a cell within an area that includes an area of a femtocell that is covered by a small BTS indicated by the corresponding small-BTS identification information. The subscriber-information storage unit 140 illustrated in FIG. 12 stores therein the reference numerals denoted with the BTSs illustrated in FIGS. 1, 5, and 9 as the peripheral-BTS identification information.

The first line of the subscriber-information storage unit 140 illustrated in FIG. 12 indicates that radio communications are permitted between the mobile terminal 42 and the small BTS 30c and the BTS 20d covers a cell within an area that includes the area of the femtocell C30c that is covered by the small BTS 30c. The second line of the subscriber-information storage unit 140 illustrated in FIG. 12 indicates that radio communications are permitted between the mobile terminal 43 and each of the small BTSs 30a to 30c and the BTS 20c covers a cell within an area that includes the areas of the femtocells C30a to C30c that are covered by the small BTSs 30a to 30c.

The processing unit 150 performs access control by the RNC 100 according to the present embodiment. The processing unit 150 includes an identification-information presence determining unit 151, a terminal-identification-information acquiring unit 152, a connection-requested object determining unit 153, a multiple-cell presence determining unit 154, an access-permission determining unit 155, a base-station identification-information acquiring unit 156, a frequency-band coincidence determining unit 157, and a communications instruction unit 158.

The identification-information presence determining unit 151 is a processing unit that determines whether terminal identification information included in a connection request received from a mobile terminal is stored in the subscriber-information storage unit 140. More particularly, upon receiving a connection request from a mobile terminal, the identification-information presence determining unit 151 determines whether the terminal identification information included in the connection request is TMSI. After that, if the terminal identification information is TMSI, the identification-information presence determining unit 151 determines whether the TMSI is stored in the subscriber-information storage unit 140.

The terminal-identification-information acquiring unit 152 is a processing unit that acquires from the higher-level device 10a IMSI corresponding to TMSI. More particularly, if the identification-information presence determining unit 151 determines that TMSI included in the connection request is not stored in the subscriber-information storage unit 140, the terminal-identification-information acquiring unit 152 sends the TMSI to the higher-level device 10a and requests the higher-level device 10a to send back IMSI corresponding to the TMSI. The terminal-identification-information acquiring unit 152 then receives IMSI from the higher-level device 10a, and registers the received IMSI to the subscriber-information storage unit 140.

The connection-requested object determining unit 153 is a processing unit that determines whether a base station that is requested by the mobile terminal to make radio communications therewith (hereinafter, "connection requested BTS") is a small BTS. More particularly, the connection-requested object determining unit 153 determines whether a base station that covers a cell indicated by cell information that is included in the connection request is a small BTS.

In the example illustrated in FIG. 1, for example, a connection request is received that includes the cell information having information indicative of "femtocell C30a"; therefore, the connection-requested object determining unit 153 determines that the connection requested BTS is a small BTS. On the other hand, in the example illustrated in FIG. 5, a connection request is received that includes the cell information having information indicative of "cell C20-2c"; therefore, the connection-requested object determining unit 153 determines that the connection requested BTS is not a small BTS.

The multiple-cell presence determining unit 154 is a processing unit that determines whether the BTS 20 or the small BTS 30 covers multiple cells having different frequency bands. More particularly, if the connection-requested object determining unit 153 determines that the connection requested BTS is not a small BTS, the multiple-cell presence determining unit 154 determines whether the connection requested BTS covers multiple cells having different frequency bands.

On the other hand, if the connection-requested object determining unit 153 determines that the connection requested BTS is a small BTS, the multiple-cell presence determining unit 154 acquires, from the subscriber-information storage unit 140, peripheral-BTS identification information in which the base-station identification information for identifying the connection requested BTS coincide with small-BTS identification information. After that, the multiple-cell presence determining unit 154 determines whether the peripheral BTS indicated by the acquired peripheral-BTS identification information covers multiple cells having different frequency bands.

In the example illustrated in FIG. 9, for example, the connection requested BTS receives a connection request for the small BTS 30a and the connection-requested object determining unit 153 determines that the connection requested BTS is a small BTS. Moreover, the subscriber-information storage unit 140 stores therein information as illustrated in FIG. 12. In this example, the multiple-cell presence determining unit 154 acquires, from the subscriber-information storage unit 140, peripheral-BTS identification information "20c" that has small-BTS identification information "30a". After that, the multiple-cell presence determining unit 154 determines whether the BTS 20c covers multiple cells having different frequency bands.

The access-permission determining unit 155 is a processing unit that determines whether radio communications are permitted between the connection request sender mobile terminal and the connection requested BTS. More particularly, if the connection-requested object determining unit 153 determines that the connection requested BTS is a small BTS, the access-permission determining unit 155 acquires, from the subscriber-information storage unit 140, small-BTS identification information corresponding to the terminal identification information that is included in the connection request. After that, the access-permission determining unit 155 determines whether the small BTS indicated by the acquired small-BTS identification information is the connection requested BTS.

If the small BTS indicated by the acquired small-BTS identification information is the connection requested BTS, the access-permission determining unit 155 determines that radio communications are permitted between the connection request sender mobile terminal and the connection requested BTS. On the other hand, if the small BTS indicated by the acquired small-BTS identification information is not the connection requested BTS, the access-permission determining unit 155 determines that radio communications are not permitted between the connection request sender mobile terminal and the connection requested BTS.

The base-station identification-information acquiring unit 156 is a processing unit that acquires small-BTS identification information from the subscriber-information storage unit 140. More particularly, if the connection-requested object determining unit 153 determines that the connection requested BTS is not a small BTS and the multiple-cell presence determining unit 154 determines that the connection requested BTS covers multiple cells having different frequency bands, the base-station identification-information acquiring unit 156 acquires, from the subscriber-information storage unit 140, small-BTS identification information in which the terminal identification information that is included in the connection request coincides with the information included in IMSI or TMSI and base-station identification information for identifying the connection requested BTS coincides with the information included in peripheral-BTS identification information.

For example, in the example illustrated in FIG. 5, a connection request is received that indicates the BTS 20c as the connection requested BTS, and the connection-requested object determining unit 153 determines that the connection requested BTS is not a small BTS. Moreover, the subscriber-information storage unit 140 stores therein information as illustrated in FIG. 12. In this example, the base-station identification-information acquiring unit 156 acquires, from the subscriber-information storage unit 140, small-BTS identification information "30a, 30b, and 30c" that has IMSI "43" and peripheral-BTS identification information "20c".

The frequency-band coincidence determining unit 157 is a processing unit that determines whether the frequency band of the femtocell covered by the small BTS that is indicated by the small-BTS identification information acquired by the base-station identification-information acquiring unit 156 coincides with the frequency band of the cell covered by the connection requested BTS.

In the above example illustrated in FIG. 5, the base-station identification-information acquiring unit 156 acquires the small-BTS identification information "30a, 30b, and 30c"; therefore, the frequency-band coincidence determining unit 157 determines whether the frequency band of the femtocell 30a is equal to the frequency band of the cell C20-2c. In the same manner, the frequency-band coincidence determining unit 157 determines whether the frequency band of the femtocell 30b is equal to the frequency band of the cell C20-2c and whether the frequency band of the femtocell 30c is equal to the frequency band of the cell C20-2c.

The communications instruction unit 158 is a processing unit that causes the mobile terminal to make radio communications with a BTS or a small BTS. More particularly, the communications instruction unit 158 permits or rejects radio communications between the mobile terminal and the connection requested BTS and instructs the mobile terminal to measure the received signal intensity of a predetermined frequency band. Moreover, the communications instruction unit 158 instructs, in accordance with the measured received signal intensity received from the mobile terminal, the mobile terminal to use a cell or a femtocell that has the highest received signal intensity or a cell or a femtocell that has the received signal intensity higher than or equal to the specified value.

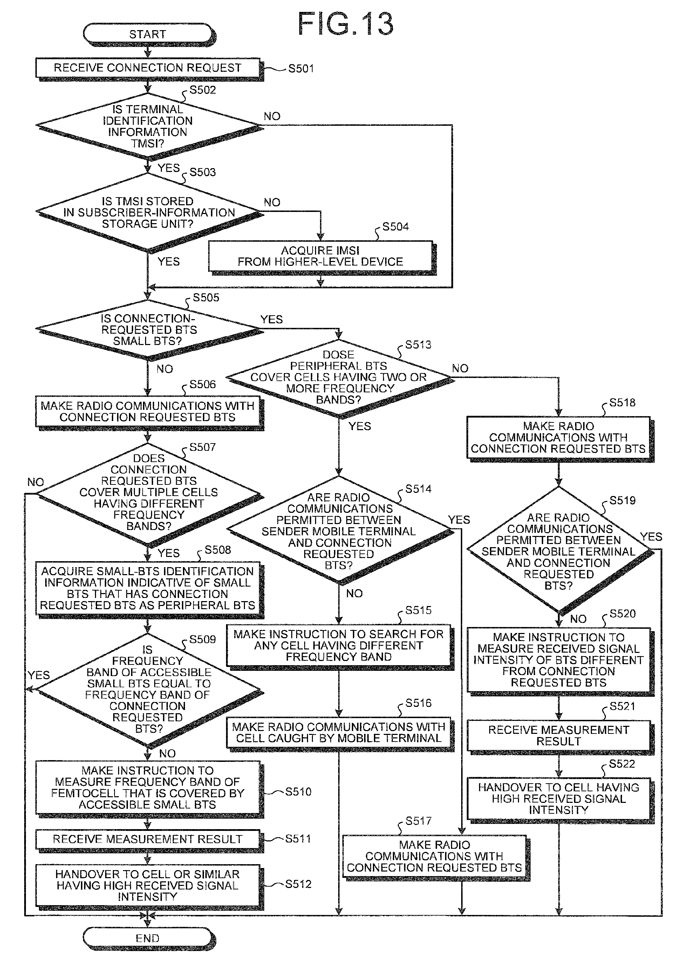

The access control process performed by the RNC 100 is described below. FIG. 13 is a flowchart of the access control process performed by the RNC 100. As illustrated in FIG. 13, when receiving a connection request from a mobile terminal (Step S501), the identification-information presence determining unit 151 of the RNC 100 determines whether terminal identification information included in the connection request is TMSI. If the terminal identification information is TMSI (Yes at Step S502), the identification-information presence determining unit 151 determines whether the TMSI is stored in the subscriber-information storage unit 140.

If the identification-information presence determining unit 151 determines that the TMSI included in the connection request is not stored in the subscriber-information storage unit 140 (No at Step S503), the terminal-identification-information acquiring unit 152 acquires, from the higher-level device 10a, IMSI corresponding to the TMSI (Step S504). If the terminal identification information included in the connection request is not TMSI (No at Step S502) or if the TMSI included in the connection request is stored in the subscriber-information storage unit 140 (Yes at Step S503), the terminal-identification-information acquiring unit 152 does not perform the IMSI acquiring process.

After that, the connection-requested object determining unit 153 determines whether the connection requested BTS is a small BTS. If the connection-requested object determining unit 153 determines that the connection requested BTS is not a small BTS (No at Step S505), the communications instruction unit 158 permits the mobile terminal to access the connection requested BTS (Step S506) and assigns an individual channel to the mobile terminal 43.

After that, the multiple-cell presence determining unit 154 determines whether the connection requested BTS covers multiple cells having different frequency bands. If the multiple-cell presence determining unit 154 determines that the connection requested BTS covers multiple cells having different frequency bands (Yes at Step S507), the base-station identification-information acquiring unit 156 acquires small-BTS identification information indicative of a small BTS that has the connection requested BTS as a peripheral BTS (Step S508). More particularly, the base-station identification-information acquiring unit 156 acquires, from the subscriber-information storage unit 140, small-BTS identification information in which the terminal identification information that is included in the connection request coincides with the information included in IMSI or TMSI and base-station identification information for identifying the connection requested BTS coincides with the information included in peripheral-BTS identification information. In the following, the small BTS indicated by the small-BTS identification information that is acquired by the base-station identification-information acquiring unit 156 is called "accessible small BTS".

After that, the frequency-band coincidence determining unit 157 determines whether the frequency band of the femtocell accommodated by the accessible small BTS is equal to the frequency band of the cell covered by the connection requested BTS. If the frequency-band coincidence determining unit 157 determines that they are not equal (No at Step S509), the communications instruction unit 158 instructs the mobile terminal to measure the received signal intensity of the frequency band of the femtocell covered by the accessible small BTS (Step S510).

After that, the communications instruction unit 158 receives the measured result from the mobile terminal as a response to the instruction (Step S511). The communications instruction unit 158 then instructs, in accordance with the received measured result, the mobile terminal to handover to a cell or a femtocell having the highest received signal intensity or, if the received signal intensity of the femtocell is high enough to make communications, to the femtocell (Step S512).

If the multiple-cell presence determining unit 154 determines that the connection requested BTS does not cover multiple cells having different frequency bands (No at Step S507), or the frequency-band coincidence determining unit 157 determines that they are equal. (Yes at Step S509), the communications instruction unit 158 does not instruct the mobile terminal to perform the handover process. In this example, the mobile terminal makes communications with another mobile terminal via the connection requested BTS that is in radio connection at Step S506.

On the other hand, if the connection-requested object determining unit 153 determines that the connection requested BTS is a small BTS (Yes at Step S505), the multiple-cell presence determining unit 154 acquires, from the subscriber-information storage unit 140, peripheral-BTS identification information corresponding to the small-BTS identification information indicative of the connection requested BTS. After that, the multiple-cell presence determining unit 154 determines whether the peripheral BTS indicated by the acquired peripheral-BTS identification information covers multiple cells having different frequency bands.

If the multiple-cell presence determining unit 154 determines that the peripheral BTS covers multiple cells (Yes at Step S513), the access-permission determining unit 155 determines whether radio communications are permitted between the connection request sender mobile terminal and the connection requested BTS. More particularly, the access-permission determining unit 155 acquires, from the subscriber-information storage unit 140, small-BTS identification information corresponding to the terminal identification information that is included in the connection request. After that, the access-permission determining unit 155 determines whether the small BTS indicated by the acquired small-BTS identification information is the connection requested BTS.

The access-permission determining unit 155 determines that radio communications are not permitted between the sender mobile terminal and the connection requested BTS (No at Step S514), the communications instruction unit 158 instructs the mobile terminal to reject access to the connection requested BTS and search for any cells using a different frequency band (Step S515). More particularly, the communications instruction unit 158 sends an RRC CONNECTION REJECT to the mobile terminal. The communications instruction unit 158 selects a frequency band from the frequency bands of the multiple cells covered by the peripheral BTS of the connection requested BTS so that the selected frequency band is different from the frequency band of the cell covered by the connection requested BTS and sets the selected frequency band to Redirection info that is included in the RRC CONNECTION REJECT.

Upon receiving the RRC CONNECTION REJECT, the mobile terminal performs a cell search and catches any cell having the frequency band of Redirection info. The communications instruction unit 158 instructs the mobile terminal to perform radio communications using the cell caught by the mobile terminal (Step S516).

On the other hand, if the access-permission determining unit 155 determines that radio communications are permitted between the sender mobile terminal and the connection requested BTS (Yes at Step S514), the communications instruction unit 158 causes the mobile terminal to perform radio communications with the connection requested BTS (Step S517).

If the multiple-cell presence determining unit 154 determines that the peripheral BTS does not cover multiple cells having different frequency bands (No at Step S513), the communications instruction unit 158 causes the mobile terminal to perform radio communications with the connection requested BTS (Step S518). After that, the access-permission determining unit 155 determines whether radio communications are permitted between the connection request sender mobile terminal and the connection requested BTS.

If the access-permission determining unit 155 determines that radio communications are not permitted between the sender mobile terminal and the connection requested BTS (No at Step S519), the communications instruction unit 158 instructs the mobile terminal to measures the received signal intensity of a base station other than the connection requested BTS (Step S520). More particularly, the communications instruction unit 158 sends a MEASUREMENT CONTROL to the mobile terminal with the Additional measurements list having no connection requested BTS.

After that, the communications instruction unit 158 receives the measured received signal intensity from the mobile terminal as a response to the instruction (Step S521). The communications instruction unit 158 then instructs, in accordance with the received measured result, the mobile terminal to handover to a cell or a femtocell having the highest received signal intensity or, if the received signal intensity of the femtocell is high enough to make communications, to the femtocell (Step S522).

As described above, according to the present embodiment, if TMSI included in the connection request is not stored in the subscriber-information storage unit 140, the RNC 100 acquires IMSI corresponding to the TMSI from the higher-level device 10a; therefore, the RNC 100 can correctly determine whether radio communications are permitted between the mobile terminal and the small BTS. Thus, the RNC 100 prohibits the mobile terminals other than some particular mobile terminals from accessing a particular BTS.

Moreover, according to the present embodiment, if the RNC 100 receives a connection request for making a connection with a BTS from a mobile terminal that is in an area that includes cells or femtocells having multiple frequency bands, the RNC 100 determines whether any small BTS is present that is permitted to make radio communications with the mobile terminal, has the connection requested BTS as a peripheral BTS, and covers a femtocell having the frequency band different from the frequency band to be measured by the mobile terminal. If a small BTS that satisfies the above conditions is present, the RNC 100 instructs the mobile terminal to measure the received signal intensity of the frequency band of the femtocell covered by the small BTS; therefore, the RNC 100 can cause the mobile terminal to access the small BTS. Thus, the RNC 100 allows some particular mobile terminals to access a particular BTS.

As described above, according to the present embodiment, the RNC 100 allows some particular mobile terminals to access a particular BTS, while prohibiting the other mobile terminals from accessing the particular BTS.

Although, in the above embodiments, each time when receiving a connection request from the mobile terminal, it is determined whether TMSI included in the connection request is stored in the subscriber-information storage unit 140 and, if the TMSI is not stored in the subscriber-information storage unit 140, IMSI is acquired from the higher-level device 10a, the terminal-identification-information acquiring unit 152 can be configured to acquire IMSI corresponding to TMSI periodically from the higher-level device 10a and update the subscriber-information storage unit 140. If so, it is unnecessary to perform the process of determining, in response to each connection request received from a mobile terminal, whether TMSI is registered to the subscriber-information storage unit 140 and the process of acquiring IMSI from the higher-level device 10a. This makes it possible to prevent, even when multiple mobile terminals access the RNC 100 at the same time, an increase in the processing load on the RNC 100 and an increase in the traffic between the RNC 100 and the higher-level device 10a.

Although, in the above embodiments, the radio access network includes the RNC and the BTS in a separated manner, the access control function of the RNC 100 can be applicable to a device that includes both a RNC and a BTS as a unit.

## Claims

1. A radio network control device comprising:
a storage unit that stores therein, in association with identification information unique to a mobile terminal, base-station identification information for identifying a base station that is permitted to make radio communications with the mobile terminal;
an acquiring unit that acquires, if identification information that is received from a certain mobile terminal is identification information that is temporarily assigned to the certain mobile terminal, unique identification information corresponding to the identification information from a higher-level device; and
a radio-communications control unit that controls radio communications between the certain mobile terminal and a base station in accordance with base-station identification information corresponding to the acquired identification information unique to the certain mobile terminal stored in the storage unit.

2. The radio network control device according to claim 1, wherein
when no base-station identification information for identifying a base station that is permitted to make radio communications is stored in the storing unit in association with the temporarily assigned identification information, the acquiring unit performs the acquiring, and
when base-station identification information for identifying a base station that is permitted to make radio communications is stored in the storing unit in association with the temporarily assigned identification information, the radio-communications control unit performs control over radio communications between the certain mobile terminal and a base station in accordance with information stored in the storage unit.

3. The radio network control device according to claim 1, further comprising:
a multiple-cell presence determining unit that determines whether a base station covers multiple cells having different frequency bands; and
an access-permission determining unit that determines, when a connection request that includes cell information indicative of a cell to be used for radio communications is received from the certain mobile terminal, in accordance with base-station identification information stored in the storage unit, whether radio communications are permitted between the mobile terminal and a connection requested base station, wherein the connection requested base station is a base station that covers the cell indicated by the cell information that is included in the connection request, wherein
the storage unit further stores therein peripheral base-station identification information for identifying a peripheral base station in association with the base station identification information, wherein the peripheral base station is a base station that covers a cell within an area that includes an area of the cell that is covered by the base station indicated by the base station identification information,
when the connection request is received from the certain mobile terminal, the multiple-cell presence determining unit determines whether a peripheral base station of the connection requested base station covers multiple cells having different frequency bands,
if the multiple-cell presence determining unit determines that the peripheral base station covers multiple cells and if the access-permission determining unit determines that radio communications are not permitted between the mobile terminal and the connection requested base station, the radio-communications control unit instructs the certain mobile terminal to make radio communications using a cell that is selected from the multiple cells covered by the peripheral base station and has a frequency band different from the frequency band of the cell indicated by the cell information that is included in the connection request.

4. The radio network control device according to claim 3, wherein if the multiple-cell presence determining unit determines that the peripheral base station does not cover multiple cells and if the access-permission determining unit determines that radio communications are not permitted between the mobile terminal and the connection requested base station, the radio-communications control unit instructs the certain mobile terminal to make radio communications with the peripheral base station.

5. The radio network control device according to claim 3 or 4, further comprising:
a base-station identification-information acquiring unit that acquires, from the subscriber-information storage unit, base-station identification information indicative of a base station that has the connection requested base station as a peripheral base station; and
a frequency-band coincidence determining unit that determines whether a frequency band of a cell that is covered by the base station indicated by the base-station identification information that is acquired by the base-station identification-information acquiring unit is equal to a frequency band of the cell indicated by the cell information included in the connection request, wherein
if the connection requested base station is a peripheral base station, the multiple-cell presence determining unit determines whether the connection requested base station covers multiple cells having different frequency bands, and
if the multiple-cell presence determining unit determines that the connection requested base station covers multiple cells and if the frequency-band coincidence determining unit that determines that they are not equal, the radio-communications control unit instructs the certain mobile terminal to make radio communications using a cell that is selected from the multiple cells covered by the connection requested base station and has a frequency band different from the frequency band of the cell indicated by the cell information that is included in the connection request.

6. The radio network control device according to claim 1, wherein the acquiring unit periodically acquires, from a higher-level device, the temporarily assigned identification information corresponding to identification information that is stored in the storage unit.

7. A radio network control method performed by a radio network control device that makes radio communications with a base station, the radio network control method comprising:
in the radio network control device,
an acquiring step of acquiring, if identification information that is received from a certain mobile terminal is identification information that is temporarily assigned to the certain mobile terminal, unique identification information corresponding to the identification information from a higher-level device; and
a radio-communications control step of controlling radio communications between the certain mobile terminal and a base station in accordance with base-station identification information corresponding to the acquired identification information unique to the certain mobile terminal stored in a storage unit, wherein the storage unit stores therein, in association with identification information unique to a mobile terminal, base-station identification information for identifying a base station that is permitted to make radio communications with the mobile terminal.
